Europäisches Patentamt

European Patent Office

Office européen des brevets

(11) Publication number: **0 420 566 B1**

# EUROPEAN PATENT SPECIFICATION

(45) Date of publication of patent specification: **06.12.95**  (51) Int. Cl.⁶: **C08L 25/10**, C08L 25/14, A46B 5/00

(21) Application number: **90310472.7**

(22) Date of filing: **25.09.90**

---

(54) **A polymer alloy composition suitable for injection molding.**

---

(30) Priority: **26.09.89 US 412693**

(43) Date of publication of application:
**03.04.91 Bulletin 91/14**

(45) Publication of the grant of the patent:
**06.12.95 Bulletin 95/49**

(84) Designated Contracting States:
**AT DE FR GB**

(56) References cited:
**EP-A- 0 307 818**
**US-A- 2 941 977**
**US-A- 4 386 190**

(73) Proprietor: **JOHNSON & JOHNSON CONSUMER PRODUCTS, INC.**
**501 George Street**
**New Brunswick**
**New Jersey 08903 (US)**

(72) Inventor: **Kent, John R.**
**7 Byron Lane**
**Yardly, Philadelphia 19067 (US)**
Inventor: **Chen, Albert**
**14 Vaux Hall Road**
**East Brunswick,**
**New Jersey 08816 (US)**
Inventor: **Yost, Kevin G.**
**123 Hobart Avenue**
**Short Hills,**
**New Jersey 07078 (US)**

(74) Representative: **Mercer, Christopher Paul et al**
**Carpmaels & Ransford**
**43, Bloomsbury Square**
**London WC1A 2RA (GB)**

---

## Description

Field of the Invention

This invention relates to polymer alloy compositions suitable for injection molding. More particularly, the invention comprises a polymer alloy composition suitable for injection molding of articles such as toothbrushes which comprise a mixture of methylmethacrylate, styrene and butadiene.

Background of the Invention

Conventional compositions for injection molding of clear articles such as toothbrushes or hair brushes include cellulose based polymers, e.g. cellulose acetate and cellulose acetate propionate. Styrene acylonitrile co-polymers and polyester compounds have also been employed to make toothbrushes. Polymethylmethacrylate and polystyrene have been used for clear, thick hair brushes, but they are unsatisfactory for toothbrush handles because of the brittleness of the material which is not suitable for the thinner handle toothbrushes.

Many transparent polymers have functional problems when applied to toothbrush design, e.g. densly tufted toothbrushes which have hole-to-hole centers as close as possible for the bristles. The limited ability of these materials to absorb energy results in cracking of the tufted area. Other physical requirements must be met by the characteristics of a polymer composition for optimally designing a toothbrush and such factors include; proper flexural and tensile properties combined with adequate ductility. Optical clarity of the polymer composition is also mandatory for acceptable aesthetics for consumer products such as toothbrushes. Some of the best materials presently used are cellulose acetate materials, and particularly, cellulose acetate propionate (CAP). CAP has been a preferred material because it has desirable stiffness, tensile strength and elongation characteristics, but CAP has been particularly desirable because it is a clear plastic. Polypropylene (PP) has cost advantages over CAP, but PP has the drawback of being opaque and does not provide a clear appearance to articles molded therefrom. The opaque PP is not as aesthetically desirable as CAP for application to consumer products such as toothbrushes.

EP-A-0307818 describes transparent, shock-resistant thermoplastic compositions comprising: (A) 5 to 95% w/w of a linear and/or branched block copolymer formed by anionic polymerization of 40 to 95% w/w styrene and 60-5% w/w butadiene, and (B) 95 to 5% w/w of at least one other styrene-containing copolymer formed by copolymerizing, in a statistical distribution, 97-55% w/w of styrene and 3 to 45% w/w of methyl methacrylate.

US-A-4386190 describes a high impact resistant polymer comprising a blend of: (A) a resinous, essentially non-elastomeric block copolymer of from 30-36% w/w of a conjugated diene (e.g. butadiene) and from 64-70% w/w of a vinylarene (e.g. styrene), and (B) a copolymer of a vinylarene (e.g. styrene) and an acrylate such as methyl methacrylate, said blend having from about 21-34% w/w in total of the conjugated diene.

A long felt need therefore exists in the industry for a polymer composition which is of low cost, transparent, and of the proper stiffness, tensile strength, and elongation for use in consumer products. It is therefore the object of the present invention to provide a polymer alloy composition suitable for injection molding which has superior characteristics to cellulose acetate propionate, but is a less expensive raw material for the making of clear injection molded products, particularly toothbrushes.

The present invention provides a clear polymer alloy composition suitable for injection molding comprising a mixture of a styrene-methylmethacrylate copolymer and a styrene-butadiene copolymer wherein the mixture comprises 6 to 12% methylmethacrylate, 73 to 80% styrene, and 12 to 18% butadiene by weight of the total composition, and wherein the polymer alloy is compounded from a styrene-butadiene copolymer comprising 75% styrene and 25% butadiene.

In preferred embodiments of the invention, the composition comprises about 9% methylmethacrylate, 77% styrene and 14% butadiene by weight of the total composition. The polymer components must have compatible indices of refraction in order to produce a transparent, haze free, molded product. In preferred embodiments of the invention the polymer alloy composition is suitable for injection molding of toothbrush handles and the invention embodies toothbrush handles comprising such compositions.

Accordingly, the present invention also provides a method of preparing toothbrush handles comprising the steps of: blending a polymer mix at temperatures above the melting point of the mix, to produce a molten polymer alloy according to the present invention; introducing the molten polymer alloy into an injection mold designed to produce a toothbrush handle and molding a toothbrush handle in said mold; and cooling the injection mold to form a toothbrush handle.

In preferred embodiments of the method of the invention, the blending temperature is about 204°C (400°F). In other preferred embodiments of the method of the invention, the polymer mix is 9% methylmethacrylate; 77% styrene; and 14% butadiene by weight of the total composition.

Reference will now be made in detail to preferred embodiments of the invention, examples of which are illustrated in the following Examples section. To achieve the object of the invention of providing a polymer alloy composition suitable for injection molding of articles which have good optical clarity and toughness, i.e. stiffness, tensile strength and elongation, for use in consumer articles particularly toothbrushes, a unique alloy of methylmethacrylate, styrene and butadiene has been developed.

A unique polymer alloy blend of the invention, which comprises methylmethacrylate, styrene and butadiene, has overcome many difficulties associated with previously used polymers for producing consumer products, particularly toothbrushes, by providing the proper balance of key physical, chemical, aesthetic and economical properties. The unique polymer blend of the invention is non-toxic; it is safe for oral cleaning devices and other consumer uses. Further, the polymer alloy of the invention can be colored, tinted with safe colorants and dyes to produce aesthetically pleasing articles for consumer marketing and sale.

Styrene/methylmethacrylate copolymer is commercially available as NAS 20 brand acrylic co-polymer. Styrene/butadiene rubber is available commercially as a mixture designated as K-resin brand polymer (i.e. KRO3 or KR01). The present inventors have found that blending these two commercially available polymer mixtures (acrylic co-polymer and styrene/butadiene rubber) produces a three-component polymer alloy or mixture which has greatly improved properties of toughness, optical clarity and expense over previously known prior art materials when used for the injection molding. KR03 is particularly preferred because of its high tensile elongation properties. Equivalent materials from other manufacturers should perform as well.

It is has been found by the present inventors that this three-component polymer alloy composition is particularly suitable for injection molding to produce consumer products especially toothbrushes. Toothbrush handles require a material that is of a particular stiffness, yet is not brittle nor inflexible, and has a good feel in the hand of a consumer. Further, the material must have excellent tenacity for binding toothbrush bristles and tufts of bristles in a permanent manner that will withstand tough consumer usage of the product. Further, the materials must be aesthetically pleasing and inexpensive in order to produce an acceptable and affordable consumer toothbrush product.

The present invention also comprises a method of preparing toothbrush handles utilizing the unique polymer alloy composition of the invention. While it is possible to blend the three components of the polymer alloy composition and mix directly in a molding feed screw, it has been found that it is preferred to first blend and compound the polymer composition at a temperature above the melting point of the polymer mix, e.g. about 204°C (400°F), and thereafter to introduce the pre-compounded colored or colorless pellets into an injection molding machine to provide the molten polymer alloy to mold the desired consumer product. Preferably the consumer product is a toothbrush handle. Preferably, colors are compounded with the polymer alloy during the initial blending step under controlled extrusion or other compounding process conditions to prevent degradation and haze. During the injection molding process it is also important to control the melt temperatures below 221°C (430°F) and to use a moderate compression ratio screw (e.g. less than a 3:1 compression ratio).

When toothbrushes are being prepared, toothbrush bristles are inserted into the molded polymer handle utilizing conventional bristling equipment (e.g. Boucherie, Zahoransky or Evans machines). Other types of mechanical stapling-bristling equipment are also suitable and can be applied in accordance with conventional methods to produce toothbrushes in accordance with the invention.

The invention will now be illustrated by Examples. The Examples are not intended to be limiting of the scope of the present invention, but read in conjunction with the detailed and general description above, provide further understanding of the present invention, and an outline of a process for preparing the polymer alloy compositions and toothbrush handles of the invention.

Example 1

The polymer material is a mixture of by weight of the total weight of the composition 45% NAS 20 (POLYSAR®), a styrene methylmethacrylate copolymer comprising 80% styrene and 20% methylmethacrylate and 55% KR03 (Phillips 66 Company) a styrene-butadiene copolymer comprising 75% styrene and 25% butadiene. The polymer material is made by compounding these two compositions in an extruder with melt temperatures of approximately 204°C (400°F). Compatible dye or pigments are added during the blending prior to extrusion. The choice of color depends upon the selection of transparent or opaque colors, or a range in-between. After weighing and blending, the material is extruded into strands and chopped into nominally 3.2 mm (1/8") cubes. The material may or may not have an external lubricant blended in to assist pack-out into bags, drums or gaylords. This external lubricant could take the form of a metallic soap, such as zinc stearate or a synthetic wax.

The pellets are dried for two hours in a dehumidifying desicant dryer operating at approximately 66°C (150°F) and low dew point and then fed to injection molding machines.

A custom designed injection mold for the handle is employed. A variety of gates may be used, such as edge gating, tunnel gating, and direct runnerless (hot runner or insulated). In order to successfully mold the polymer and avoid visible striations in the molded part it is necessary to carefully select the gating and/or to include a movable flow pin located near the polymer entrance to the cavity. The flow pin is mechanically or hydraulically operated into the forward position and then returned by either the viscosity of the resin or by a double acting cylinder based on time or distance. When the handle is completely molded there is no hole or concavity; only a simple "witness" circle showing where the pin is located. Conversely, the special flow pin is not required if the resultant handle has a designed hole in front of the gate, either rectangular or circular at the gate end of the brush.

The polymer is melted in the screw extruder which operates intermittently and also as a ram so as to inject the melted polymer at a temperature not to exceed 228°C (425°F) into the mold. The rates of fill time vary with the size and shape of the part, and the pressure used is typical of the injection molding process. Mold temperatures used are conventionally known to those skilled in the injection molding art, e.g. 38° to 60°C (100° to 140°F).

The bristling application into the molded handle is done utilizing conventional toothbrush bristling equipment (e.g. Boucherie TB-2, Zahoransky, or Evans machines). Other types of bristling processes are also suitable and may be substituted therefore.

Various polymer alloy composition blends were prepared in accordance with the above methods. The results of these blends in terms of flexural properties at yield stress and at peak stress; bristle and tuft integrity as measured by bristle and tuft removal force; and fatigue failure as measured by a flexing test were carried out on various examples of the invention and comparative examples as is described below. These examples show that the particular embodiments of the invention provides superior toughness characteristics in terms of flexural strength and bristle and tuft tenacity to provide superior toothbrush handles.

The toothbrush handles produced in accordance with the invention also were aesthetically pleasing in terms of optical clarity and surface consistency.

Examples 2-5

These examples are carried out according to the procedure of Example I with the particular formulations indicated and the products produced thereby. These examples as well as control examples were subjected to fatigue-failure or flexural testing; and bristle and tuft tenacity by a force of removal test. The formulations of these examples and their performance in flexural and bristle removal testing are provided below in Table I.

The subject alloy is shown in Table I to have flexural strength properties superior or equivalent to cellulose acetate propionate and superior to polypropylene. Bristle removal forces are superior or equivalent to cellulose acetate propionate and far superior to polypropylene. The above noted properties for the toothbrush handles made in accordance with Examples 2-5 of the invention demonstrate desirable strength and stiffness (flexural properties) and

| Example No. | Formulation M% / S% / B% | Molded Toothbrush Handle Flexural Property (psi) Yield Strength | Peak Strength | Removal Force Bristle % < 50g | tuft % < 1.36kg |
|---|---|---|---|---|
| 2 | 8/77/15 | 9,300 at 10° / 12,400 at 74° | 2% | 0% |
| 3 | 7/77/16 | 8,900 at 10° / 11,900 at 74° | 8% | 0% |
| 4 | 9/77/14 | 9,300 at 12° / 12,300 at 74° | 4% | 0% |
| 5 | 10/78/12 | 10,200 at 10° / 13,200 at 74° | 6% | 0% |
| Comparative Example A | 0/75/25 | None / 6,050 at 10° | – | – |
| Comparative Example B | 15/79/6 | None / 11,500 at 10° (Brittle) | – | – |
| Comparative Example C (EB 89-64) | CAP | 9,300 at 14° / 12,100 at 64° | 7% | 0% |
| Comparative Example D | Polypropylene | 6,950 at 20° / 7,600 at 38° | 30% | 0% |

M = methylmethacrylate, S = styrene, B = butadiene

psi = average pounds per square inch. (1 psi = 6895 N/m²)

%<50g = the % of Samples with pull-removal force of less than 50g.

%<1.36kg = the % of Samples with pull-removal force of less than 1.35kg.

(0235I)

retention of bristles and tufts. Further, the toothbrush handles produced thereby are economically and aesthetically acceptable for consumer marketing and use. Comparative Example A was found to be weak with no yield strength; it has no methylmethacrylate and is therefore outside the scope of this invention. Comparative Example B was found to be brittle, again having no yield strength; it has insufficient butadiene and is outside the preferred composition range of the alloy of the invention.

The polymer alloy compositions of the invention may be utilized for producing other consumer items, e.g. other dental devices such as dental floss holders and device packages having excellent aesthetic qualities, toughness, and low price. Application of the compositions and methods of the present invention for injection molding uses can be accomplished by any extruding, injection molding, and product forming methods and techniques as are presently or prospectively known to those skilled in the polymer arts. Thus it is intended that the present application cover the modifications and variations of this invention provided they come within the scope of the appended claims.

## Claims

1. A clear polymer alloy composition suitable for injection molding comprising a mixture of a styrene-methylmethacrylate copolymer and a styrene-butadiene copolymer wherein the mixture comprises 6 to 12% methylmethacrylate, 73 to 80% styrene, and 12 to 18% butadiene by weight of the total composition, and wherein the polymer alloy is compounded from a styrene-butadiene copolymer comprising 75% styrene and 25% butadiene.

2. The composition of claim 3, comprising about 9% methylmethacrylate, 77% styrene and 14% butadiene by weight of the total composition.

3. A toothbrush handle comprising the composition of claim 1 or 2.

4. The toothbrush handle of claim 3, having a peak stress strength of greater than about 83 MPa (12,000 pounds per square inch).

5. A method of preparing toothbrush handles comprising the steps of:
    blending a polymer mix at temperatures above the melting point of the mix, to produce a molten polymer alloy according to claim 1 or 2;
    introducing the molten polymer alloy into an injection mold designed to produce a toothbrush handle and molding a toothbrush handle in said mold; and
    cooling the injection mold to form a toothbrush handle.

6. The method of claim 5, wherein the blending temperature is about 204 °C (400 °F).

7. The method of claim 5 or claim 6, wherein the molding step includes the step of adding a movable flow pin into the injection mold whereby the flow pin is introduced into the injection mold and removed prior to cooling the injection mold.

## Patentansprüche

1. Klare Polymerlegierungszusammensetzung, die zum Spritzgießen geeignet ist, umfassend ein Gemisch aus einem Styrol-Methylmethacrylat-Copolymer und einem Styrol-Butadien-Copolymer, wobei das Gemisch 6 bis 12 % Methylmethacrylat, 73 bis 80 % Styrol und 12 bis 18 % Butadien, bezogen auf das Gewicht der gesamten Zusammensetzung, umfaßt und wobei die Polymerlegierung aus einem Styrol-Butadien-Copolymer kompoundiert ist, das 75 % Styrol und 25 % Butadien umfaßt.

2. Zusammensetzung nach Anspruch 1, umfassend etwa 9 % Methylmethacrylat, 77 % Styrol und 14 % Butadien, bezogen auf das Gewicht der gesamten Zusammensetzung.

3. Zahnbürstengriff, der die Zusammensetzung nach Anspruch 1 oder 2 umfaßt.

4. Zahnbürstengriff nach Anspruch 3, der eine Höchstbeanspruchungsfestigkeit von mehr als etwa 83 MPa (12000 Pfund pro Quadratinch) aufweist.

5. Verfahren zur Herstellung von Zahnbürstengriffen, umfassend die Schritte:
    Mischen eines Polymergemischs bei Temperaturen oberhalb des Schmelzpunkts des Gemischs, um eine geschmolzene Polymerlegierung nach Anspruch 1 oder 2 zu bilden;
    Einführen der geschmolzenen Polymerlegierung in ein Spritzgießwerkzeug, das zum Herstellen eines Zahnbürstengriffs ausgestaltet ist und Formen eines Zahnbürstengriffs in dem Werkzeug; und
    Kühlen des Spritzgießwerkzeugs, um einen Zahnbürstengriff zu formen.

6. Verfahren nach Anspruch 5, wobei die Mischungstemperatur etwa 204 °C (400 °F) beträgt.

**7.** Verfahren nach Anspruch 5 oder Anspruch 6, wobei der Formungsschritt den Schritt umfaßt, daß man einen beweglichen Fließstift zu dem Spritzgießwerkzeug zufügt, wobei der Fließstift in das Spritzgießwerkzeug eingeführt wird und vor dem Abkühlen des Spritzgießwerkzeuges entfernt wird.

## Revendications

**1.** Composition transparente d'un alliage de polymères pour moulage par injection comprenant un mélange d'un copolymère de styrène-méthylméthacrylate et d'un copolymère de styrène-butadiène, dans laquelle le mélange se compose de 6 % à 12 % de méthylméthacrylate, de 73 % à 80 % de styrène, et de 12 % à 18 % de butadiène en poids sur la composition totale, et dans laquelle l'alliage de polymères est composé à partir d'un copolymère de styrène-butadiène comprenant 75 % de styrène et 25 % de butadiène.

**2.** Composition selon la revendication 1 comprenant environ, 9 % de méthylméthacrylate, 77 % de styrène et 14 % de butadiène, en poids sur la composition totale.

**3.** Manche de brosse à dents comprenant la composition selon la revendication 1 ou la revendication 2.

**4.** Manche de brosse à dents selon la revendication 3, ayant une résistance à la sollicitation maximale supérieure à 83 MPa environ (12 000 livres par pouce carré).

**5.** Procédé de préparation de manches de brosse à dents comprenant les étapes de :
mélange dosé d'une combinaison de polymères à des températures supérieures au point de fusion de la combinaison, pour produire un alliage de polymères fondu selon la revendication 1 ou 2 ;
introduction de l'alliage de polymères fondu dans un moule par injection conçu pour fabriquer un manche de brosse à dents et moulage d'un manche de brosse à dents dans ledit moule ; et
refroidissement du moule par injection pour façonner un manche de brosse à dents.

**6.** Procédé selon la revendication 5, dans lequel la température de mélange est de 204° C environ (400° F).

**7.** Procédé selon la revendication 5 ou la revendication 6, dans lequel l'étape de moulage comprend l'étape d'ajout d'un guide d'écoulement mobile dans le moule par injection, et au cours de laquelle le guide d'écoulement est introduit dans le moule par injection, et retiré avant de refroidir le moule par injection.